# EUROPEAN PATENT SPECIFICATION

(11) **EP 0 813 767 B1**
(45) Date of publication and mention of the grant of the patent: **22.05.2002**
(21) Application number: 96908486.2
(22) Date of filing: 28.02.1996
(51) Int. Cl.: H02M 7/04

(54) **SWITCHED-MODE POWER SUPPLY WITH SYNCHRONOUS PRECONVERTER**
SCHALTNETZTEIL MIT VORGESCHALTETEN SYNCHRONEN WANDLER
ALIMENTATION EN MODE COMMUTE A PRECONVERTISSEUR SYNCHRONE

(30) Priority: 09.03.1995 GB 9504755; 24.04.1995 GB 9508288; 05.06.1995 US 465399
(43) Date of publication of application: 29.12.1997
(73) Proprietor: RCA Thomson Licensing Corporation, Princeton, NJ 08540 (US)
(72) Inventor: MUCHENBERGER, Manfred, CH-8048 Zurich (CH)
(74) Representative: Zhang, Jianguo
(86) International application number: US9602287
(87) International publication number: WO9628878

(56) References cited:
- EP-A- 0 301 386
- EP-A- 0 404 996
- US-A- 5 187 414

## Description

### BACKGROUND OF THE INVENTION

This invention relates generally to the field of switched-mode power supplies, and, in particular, to switched-mode power supplies employing preconverter circuits to effect power factor correction.

An off-line switched-mode power supply may consist of a rectifier stage cascaded with a DC-DC converter stage. The rectifier stage itself consists of a rectifier section and a filter section. The rectifier section uses semiconductor power rectifiers to convert the mains voltage into a pulsating DC voltage. This DC voltage is then filtered by capacitors in the filter section to obtain a DC voltage that has relatively low ripple.

One consequence of using capacitors in the filter section is that the resulting input current waveform consists of current pulses corresponding to the peaks of the mains voltage. This happens because the rectifier diodes cannot conduct current until the mains voltage exceeds the filter capacitor's voltage. As a result, the power supply only draws power at the peaks of the mains voltage, which results in a poor power factor at the input to the power supply.

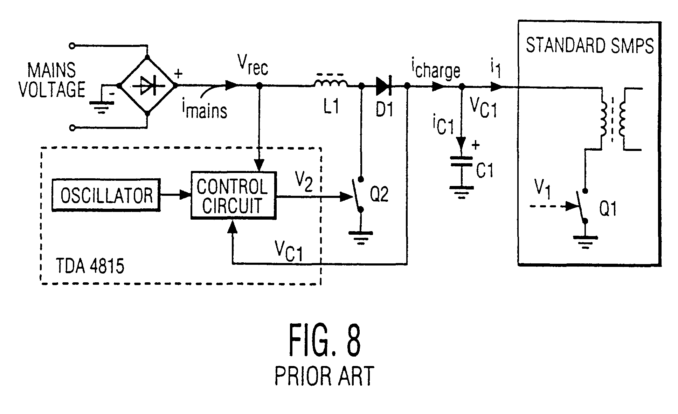

One method for improving the power factor at the input to the power supply is to place a boost-type DC-DC preconverter between the rectifier section and the filter section. The preconverter effects a power factor correction by allowing the input rectifiers to conduct sooner and conditions the input current to be sinusoidal and in phase with the mains voltage. A prior art switched-mode power supply with a boost-type DC-DC preconverter is shown in FIGURE 8. Power from the mains is rectified and fed to the preconverter. In the preconverter, a power factor controller, such as a Siemens TDA4815, controls preconverter switch Q2. Energy is stored in inductor L1 during the "on" time of preconverter switch Q2. This energy is transferred to a storage capacitor C1 by a charge current i_{charge} through a diode D1 during the "off' time of preconverter switch Q2, and is ultimately provided to the input of the switched-mode power supply as an input current i₁.

An example of such a prior art circuit is described in US patent N° US-A 5,187,414. Said reference discloses an electronic controller for fluorescent lamps including a DC-AC converter which supplies high frequency current to the lamps and a preconditioner stage which includes a switched mode power supply connected to accept power and produce a DC input for the DC-AC converter. The preconditioner and DC-AC circuits are synchronized and are either in the same phase or have a fixed phase relationship to one another. A control circuit controls the preconditioner and DC-AC converter circuits. An oscillator which supplies a square wave signal to the DC-AC converter operates during each cycle of the square wave signal to produce a control signal to a pulse width modulator circuit to control initiation of a pulse of variable width. The variable pulse being used to supply gating pulses which are required to operate the preconditioner circuit. The gating signals are also used to synchronize the two circuits.

A problem with the prior art arises from the fact that preconverter switch Q2 switches asynchronously with respect to power switch Q1 of the switched-mode power supply. This asynchronous switching results in a random phase relationship between charge current icharge through diode D1 and input current i₁ to the switched-mode power supply.

### SUMMARY OF THE INVENTION

Establishing a more optimal phase relationship between charge current i_{charge} and input current i₁ by synchronizing switching of preconverter switch Q2 and power switch Q1 would reduce the total rms current through storage capacitor C1, which is desirable for several reasons. The use of a synchronous preconverter eases the specifications for storage capacitor C1, thus allowing for the use of standard, low cost components. The life expectancy of a given storage capacitor C1 can be extended or a lower cost capacitor can be used instead. The voltage rating for storage capacitor C1 can also be reduced. The harmonic components of a mains current iₘₐᵢₙₛ can be further attenuated from present levels. A ripple voltage at the output of the switched-mode power supply can be reduced. Finally, when used with a flyback-topology switched-mode power supply in a television, the synchronous preconverter switches "off' when the television is operating in "standby" mode.

Briefly stated, a power supply according to an inventive arrangement taught herein results in a reduction of the total rms current flowing through the filter section of the power supply. The operation of a switched-mode power supply circuit is synchronized with the operation of a preconverter circuit so that an input current flows directly from the preconverter circuit to the switched-mode power supply circuit during a portion of each time interval that the switched-mode power supply circuit draws an input current.

Accordingly, a power supply according to an inventive arrangement taught herein comprises: rectifying means; power preconverting means coupled to the rectifying means; a switched-mode power supply circuit coupled to the power preconverting means; and, means for synchronizing operation of the power preconverting means with operation of the switched-mode power supply circuit.

A power supply according to a further inventive arrangement taught herein comprises: rectifying means; power preconverting means coupled to the rectifying means; energy storage means coupled to the power preconverting means; a switched-mode power supply circuit coupled to the power preconverting means and to the energy storage means; and, means for synchronizing operation of the power preconverting means with operation of the switched-mode power supply circuit.

A power supply according to another inventive arrangement taught herein comprises: rectifying means; power preconverting means coupled to the rectifying means; energy storage means coupled to the power preconverting means; a switched-mode power supply circuit coupled to the power preconverting means and to the energy storage means; and, means for supplying a current from the power preconverting means directly to the switched-mode power supply circuit during a portion of each time interval that the switched-mode power supply circuit draws an input current.

The switched-mode power supply circuit and the power preconverting means may comprise first and second switch means, respectively. A control circuit in the power preconverting means may compare the amplitude of a ramp signal, keyed to operation of the switched-mode power supply circuit, to lower and upper reference voltages. Conduction of the second switch means in the power preconverting means may be enabled whenever the ramp signal is between the lower and upper reference voltages. The second switch means in the power preconverting means may conduct during each time interval that the first switch means in the switched-mode power supply circuit conducts, beginning only after each time interval begins and always stopping before each time interval ends. In a portion of the time interval after the second switch means has stopped conducting, a current may flow directly from the power preconverting means to the switched-mode power supply circuit.

The above, and other features and advantages of the present invention will become apparent from the following description read in conjunction with the accompanying drawings, in which like reference numerals designate the same elements.

### BRIEF DESCRIPTION OF THE DRAWINGS

FIGURE 1 is a diagram, in block and schematic form, of a switched-mode power supply having an inventive arrangement.
FIGURE 2 is a block diagram of a control circuit used in a switched-mode power supply having an inventive arrangement.
FIGURE 3 is a block diagram of a phase-offset circuit used in a switched-mode power supply having an inventive arrangement.
FIGURE 4 shows particular voltage and current waveforms associated with a switched-mode power supply having an inventive arrangement.
FIGURE 5 is a schematic diagram of a presently preferred embodiment of a switched-mode power supply having an inventive arrangement.

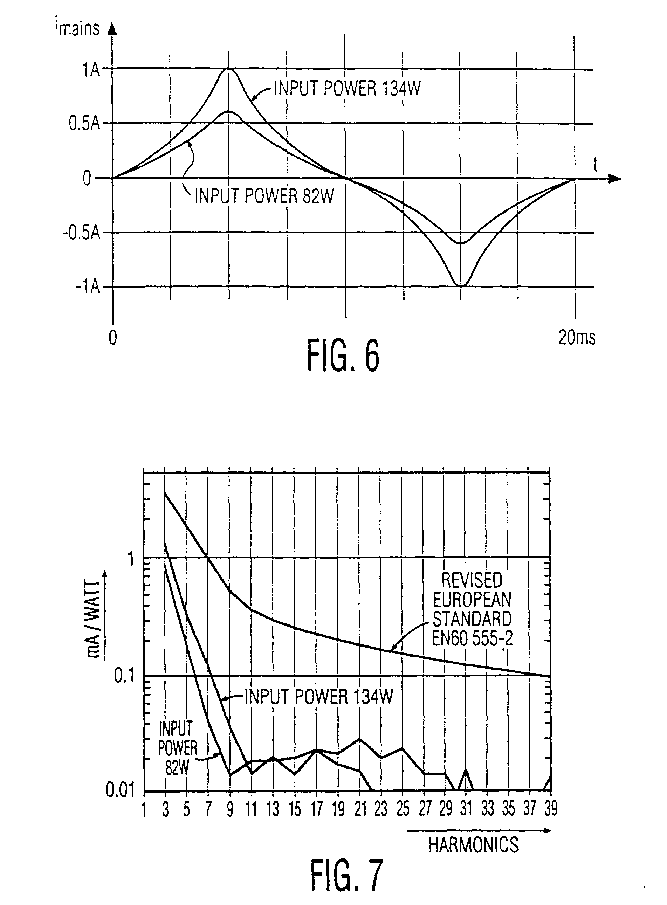

FIGURE 6 is a diagram of the mains current drawn by a presently preferred embodiment of a switched-mode power supply having an inventive arrangement.
FIGURE 7 is a diagram of the harmonic content of the mains current drawn by a presently preferred embodiment of a switched-mode power supply having an inventive arrangement.
FIGURE 8 is a diagram, in block and schematic form, of a prior art switched-mode power supply.

### DETAILED DESCRIPTION OF THE PREFERRED EMBODIMENTS

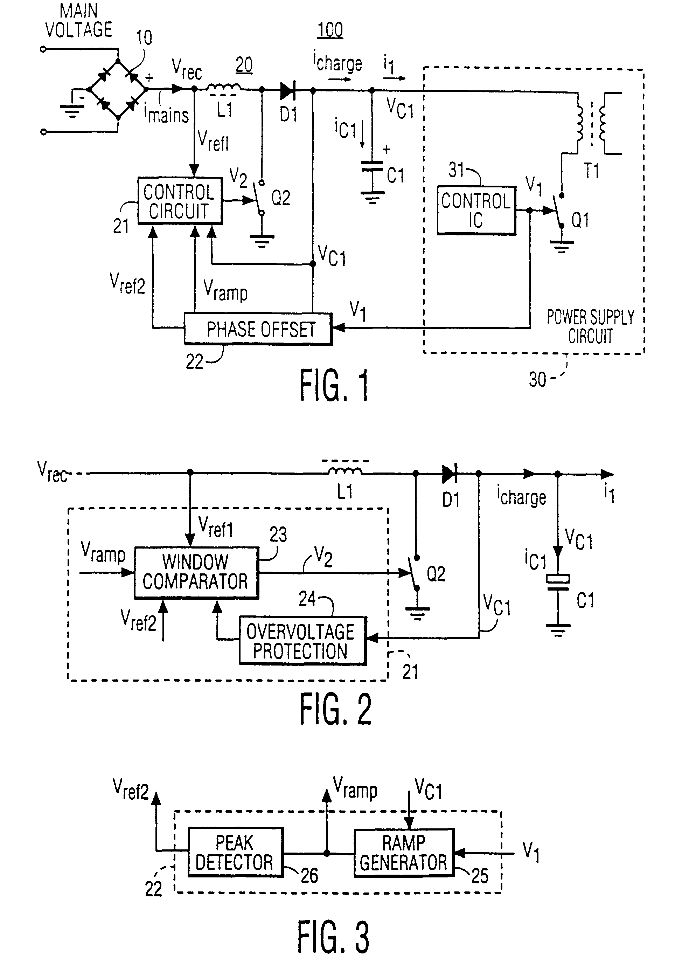

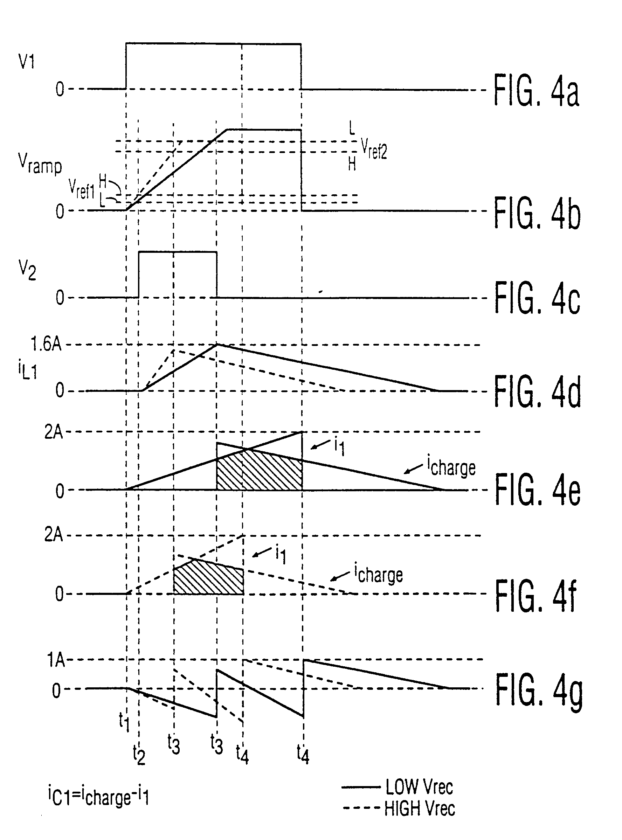

A power supply 100 that provides a more optimal phase relationship between a charge current i_{charge} and an input current i₁ is shown in FIGURES 1, 2 and 3. Voltage and current waveforms for power supply 100 are shown in FIGURE 4.

Power supply 100 includes a switched-mode power supply circuit 30 coupled to a full-wave rectifier 10 by a preconverter 20. for use in a television. A control IC 31 of switched-mode power supply circuit 30 provides a drive signal V₁, shown in FIGURE 4(a), to turn a power switch Q1 "on" and "off". The "on" time of power switch Q1 is determined by a load coupled to an output of switched-mode power supply circuit 30. A phase-offset circuit 22 uses drive signal V₁ to synchronize switching of a preconverter switch Q2 of preconverter 20 with power switch Q1 of switched-mode power supply circuit 30. By so synchronizing the switching of preconverter switch Q2 with the switching of power switch Q1, the charge current i_{charge} supplied to storage capacitor C1 by preconverter circuit 20 is modulated in response to the load coupled to an output of switched-mode power supply circuit 30.

Drive signal V₁ for power switch Q1 determines a duration for a ramp signal Vᵣₐₘₚ, which is generated by ramp generator 25 and is shown in FIGURE 4(b), and a voltage V_{C1} of storage capacitor C1 determines a slope for ramp signal Vᵣₐₘₚ. Ramp signal Vᵣₐₘₚ is compared to two reference voltages, an upper reference voltage V_{ref2} and a lower reference voltage V_{ref1}, both shown in FIGURE 4(b), in a window comparator circuit 23. When ramp signal Vᵣₐₘₚ is between upper and lower reference voltages V_{ref2} and V_{ref1}, respectively, a drive signal V₂ for preconverter switch Q2 goes "high", as shown in FIGURE 4(c), and preconverter switch Q2 turns "on".

Upper reference voltage V_{ref2} is lower than ramp voltage Vᵣₐₘₚ by the forward voltage drop of a diode (not shown) to achieve a phase offset between preconverter switch Q2 and power switch Q1, meaning that preconverter switch Q2 turns "off" before power switch Q1 turns "off". While power switch Q1 is "on" but preconverter switch Q2 is still "off", that part of charge current i_{charge} that flows directly into a transformer T1 through an inductor L1 and a diode D1 of preconverter 20 without being stored in a storage capacitor C1 is represented by the shaded areas in FIGURES 4(e) and 4(f).

Upper and lower reference voltages V_{ref2} and V_{ref1} are modulated in response to line and load conditions, as shown in FIGURE 4(b). In order to maximize that part of charge current i_{charge} flowing directly into transformer T1 without being stored in storage capacitor C1, upper reference voltage V_{ref2} is modulated proportionally to the peak of ramp voltage Vᵣₐₘₚ so that upper reference voltage V_{ref2} is lower than ramp voltage Vᵣₐₘₚ by the forward voltage drop of a diode (not shown). In this way, the slope of ramp signal Vᵣₐₘₚ is modulated by storage capacitor voltage V_{C1} such that preconverter switch Q2 turns "off" sooner as storage capacitor voltage V_{C1} increases and stays "on" longer as storage capacitor voltage V_{C1} decreases. Thus, as the "on" time of preconverter switch Q2 varies according to variations in line and load conditions, the rms value of a storage capacitor current i_{C1}, shown in FIGURE 4(g), is reduced, and the power factor and storage capacitor voltage V_{C1} become more independent of the load.

Lower reference voltage V_{ref1} is modulated proportionally to a rectified mains voltage V_{rec} so that the time during which preconverter switch Q2 is "on" is reduced as rectified mains voltage V_{rec} is increased. This is done by delaying the time at which preconverter switch Q2 turns "on" by deriving lower reference voltage V_{ref1} from rectified mains voltage V_{rec}, and it allows for a tradeoff between storage capacitor voltage V_{C1} and a desired power factor.

If storage capacitor voltage V_{C1} increases above a predetermined limit because of a fault in the circuit or because the television is operating in "standby" mode, an overvoltage protection circuit 24 pulls lower reference voltage V_{ref1} above upper reference voltage V_{ref2}, thus turning preconverter 20 "off".

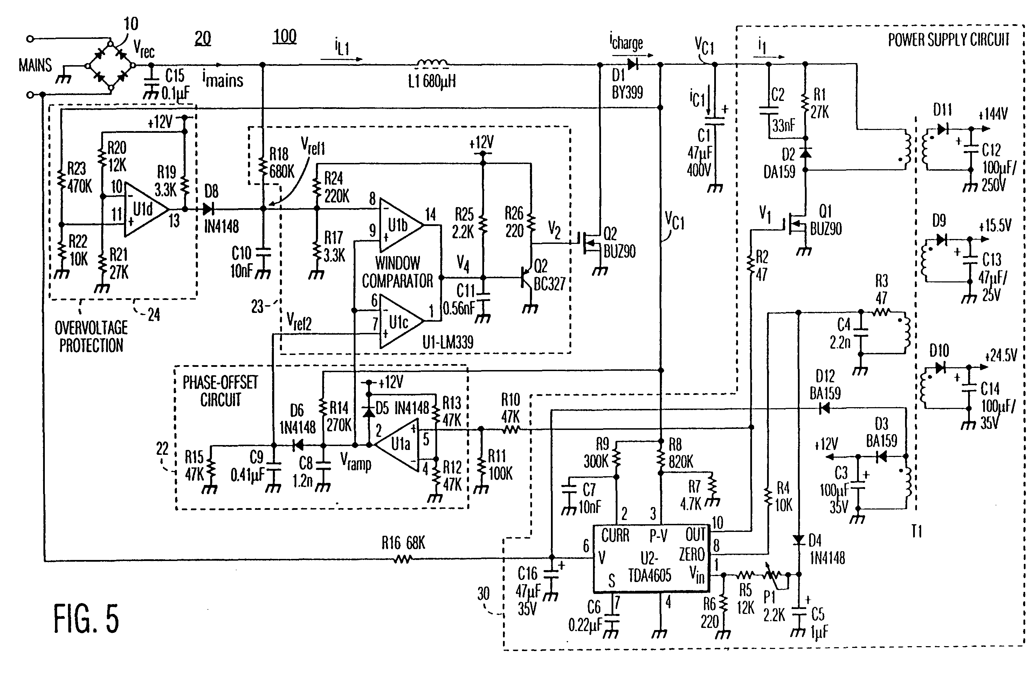

A more detailed implementation of a synchronous preconverter 20 combined with a switched-mode power supply circuit 30 for use in a television is shown in FIGURE 5. Switched-mode power supply circuit 30 includes a pulse-width modulator U2, represented in FIGURE 5 as a Siemens TDA4605-2, coupled to power switch Q1, and transformer T1, which comprises a primary winding and a plurality of secondary windings. The primary winding of transformer T1 is coupled in series with power switch Q1 and each of the plurality of secondary windings of transformer T1 is coupled in series with either one of diodes D3, D9, D10, D11, D12 or with resistor R3.

Pulse-width modulator U2 provides power switch drive signal V₁ to a gate terminal of power switch Q1 through resistor R2. When power switch drive signal V₁ goes "high", power switch Q1 turns "on" and input current i₁ begins to flow through the primary winding of transformer T1 and through power switch Q1 to a reference voltage potential. As input current i₁ flows through the primary winding of transformer T1, energy is stored therein.

When power switch drive signal V₁ goes "low", power switch Q1 turns "off", so that the flow of input current i₁ through the primary winding of transformer T1 is interrupted. A magnetic field that built up in the primary winding of transformer T1 while power switch Q1 was "on" now collapses, so that the polarity of the primary winding reverses. All the energy stored in the primary winding is now delivered to a plurality of secondary windings of transformer T1. Each one of diodes D3, D9, D10, D11, D12 now becomes forward biased, and the secondary windings deliver energy to their respective loads through diodes D3, D9, D10, D11, D12 and through resistor R3.

Switched-mode power supply circuit 30 is coupled to preconverter 20 through phase offset circuit 22, which includes comparator U1a, resistors R12, R13, R14, diode D5 and capacitors C8, C9. Comparator U1a might be one of a plurality of comparators found in an integrated circuit U1, such as the National Semiconductor LM339, as shown in FIGURE 5. Using storage capacitor voltage V_{C1} and power switch drive voltage V₁, phase-offset circuit 22 determines the shape of ramp signal Vᵣₐₘₚ and, hence, the phase offset between preconverter switch Q2 and power switch Q1.

As power switch drive signal V₁ of switched-mode power supply circuit 30 goes "high", the output of comparator U1a goes "high", allowing storage capacitor voltage V_{C1} to charge capacitor C8 through resistor R14, thus generating the positively-sloped portion of ramp signal Vᵣₐₘₚ. Diode D5 limits the voltage across capacitor C8, and thus the peak voltage of ramp signal Vᵣₐₘₚ, to +12 volts. When the output of comparator U1a goes "low", capacitor C8 discharges through the open collector output of comparator U1a.

Phase-offset circuit 22 further includes a peak-detector circuit 26, comprising diode a D6, a capacitor C9 and a resistor R15. Peak-detector circuit 26 limits ramp signal Vᵣₐₘₚ and produces upper reference voltage V_{ref2}. A forward voltage drop of diode D6 sets the level of upper reference voltage V_{ref2} to 0.7 volts below a peak of ramp signal Vᵣₐₘₚ.

Window comparator circuit 23 comprises comparators U1b, U1c; resistors R17, R18, R24, R25, R26; and gate-discharge transistor Q3. A voltage divider formed by resistors R17, R18 divides rectified mains voltage V_{rec} to provide lower reference voltage V_{ref1} to an inverting input of comparator U1b. Upper reference voltage V_{ref2} is coupled from peak-detector circuit 26 to a non-inverting input of comparator U1c. Ramp signal Vᵣₐₘₚ is provided by phase-offset circuit 22 to both the non-inverting input of comparator U1b and the inverting input of comparator U1c. The outputs of comparators U1b, U1c are coupled to each other.

Window comparator output voltage V₄ is pulled "high" by resistor R25 if ramp signal Vᵣₐₘₚ is between lower reference voltage V_{ref1} and upper reference voltage V_{ref2}. Capacitor C11 suppresses small spikes in window comparator output voltage V₄. When window comparator output voltage V₄ is "high", gate-discharge transistor Q3 is "off", and +12 volts is coupled to the gate terminal of preconverter switch Q2 through resistor R26, thereby turning "on" preconverter switch Q2. When ramp signal Vᵣₐₘₚ is below lower reference voltage V_{ref1} or above upper reference voltage V_{ref2}, window comparator output voltage V₄ goes "low" and allows gate-discharge transistor Q3 to turn "on", thereby discharging the gate terminal of preconverter switch Q2, which then turns "off". Using gate-discharge transistor Q3 to open preconverter switch Q2 allows a fast turn-off time for preconverter switch Q2.

Overvoltage protection circuit 24 includes comparator U1d and resistors R19, R20, R21, R22, R23. A voltage divider formed by resistors R20, R21 provides an overvoltage threshold voltage at the inverting input of comparator U1d. Storage capacitor voltage V_{C1} is divided by a voltage divider formed by resistors R22, R23, and the resulting voltage is provided to the non-inverting input of comparator U1d. If storage capacitor voltage V_{C1} exceeds an overvoltage limit as determined by the overvoltage threshold voltage present at the inverting input of comparator U1d, the output of comparator U1d goes "high" and resistor R19 pulls up lower reference voltage V_{ref1} through diode D8. Window comparator output voltage V₄ then goes "low", thereby allowing gate-discharge transistor Q3 to turn "on" and discharge the gate terminal of preconverter switch Q2, thereby opening preconverter switch Q2 and turning "off" preconverter 20.

## Claims

1. A power supply (100), comprising:
rectifying means (10);
a switched mode power supply circuit (30) having a first switch means (Q1);
power preconverting (20) means coupled between said rectifying means and said switched-mode power supply circuit,
means (21, 22) for synchronizing operation of said power preconverting means with operation of said switched-mode power supply circuit
said preconverting means having a second switch means (Q2); and,
wherein said synchronizing means (21, 22) synchronizes operation of said power preconverting means (20) with operation of said switched-mode power supply circuit (30) by providing a phase offset between operation of said second switch means (Q2) and operation of said first switch means (Q1) further comprising energy storage means (C1) coupled to said power preconverting means and to said switched mode power supply circuit, **characterized by** said synchronizing means (21, 22) including means for generating a control voltage (Vᵣₐₘₚ) and said second switch means (Q2) is controlled to conduct only upon receipt of said control voltage (Vᵣₐₘₚ) having a value between a first lower threshold value (V_{ref1}) and a second upper threshold (V_{ref2}) value.

2. The power supply of claim 1, **characterized in that** said power preconverting means (20) provides said power supply (30) with power factor correction.

3. The power supply of claim 1, **characterized in that** said power preconverting means (20) supplies a current only to said switched-mode power supply circuit (30) within a portion of each time interval that occurs after said second switch means (Q2) turns off and before said first switch means (Q1) tums off.

4. The power supply (100) as claimed in claim 1, **characterized by** said synchronizing means comprising:
means for generating a ramp signal (Vramp);
means for generating said first reference voltage (Vref1)
means for generating said second reference voltage (Vref2) having a value below a peak amplitude of said ramp signal.

5. A power supply according to claim 4, wherein said synchronizing means (21, 22) further comprises:
means (R18) for generating a lower reference voltage (V_{ref1}); and,
a comparator circuit (23) having inputs coupled to said lower (V_{ref1}); and upper (V_{ref2}); reference voltages.

6. A power supply (100) according to claim 5, wherein said means (R18) for generating said lower reference voltage (V_{ref1}); is coupled to said rectifying means (10).

7. A power supply (100) according to claim 6, wherein said comparator circuit (23) enables conduction of the preconverter switch (Q2) while said ramp signal is between said lower (V_{ref1}); and upper (V_{ref2}); reference voltages.

8. The power supply of claim 1, wherein said second switch means (Q2) in said power preconverting means (20) conducts during each time interval that said first switch means (Q1) in said switched-mode power supply circuit (30) conducts.

9. The power supply of claim 1, wherein said second switch means (Q2) in said power preconverting means (20) conducts for a period of time shorter than said time interval.

10. The power supply of claim 1, wherein said second switch means (Q2) in said power preconverting means (20) begins conducting only after said time interval begins and always stops conducting before said time interval ends.

11. The power supply (100) as claimed in claim 4, further comprising energy storage means (C1) coupled to said power preconverting means and said switched mode power supply circuit (30).

12. A power supply according to claim 11, wherein said synchronizing means (21, 22) further comprises:
means (R18) for generating a lower reference voltage (V_{ref1}); and,
a comparator circuit (23) having inputs coupled to said lower (V_{ref1}); and upper (V_{ref2}); reference voltages.

13. A power supply according to claim 12, wherein said means (R18) for generating said lower reference voltage (V_{ref1}) is coupled to said rectifying means (10).

14. A power supply (100) according to claim 13, **characterized in that** said comparator circuit initiates conduction of a preconverter switch (Q2) while said ramp signal (Vramp) is between said lower (Vref1) and upper (Vref2) reference voltages.

15. The power supply of claim 2, **characterized in that** said power factor correction remains independent of a load coupled to an output of said switched-mode power supply circuit (30).

16. The power supply of claim 11, **characterized in that** a time duration of said ramp signal is determined by a signal derived from said switched-mode power supply circuit (30).

17. The power supply of claim 16, **characterized in that** a slope of said ramp signal is determined by a voltage across said energy storage means (C1).

## Patentansprüche

1. Netzteil (100) mit:
Gleichrichtermitteln (10),
einer Schaltnetzteil-Schaltung (30) mit ersten Schaltmitteln (Q1),
Mitteln (20) zur Leistungs-Vorkonvertierung zwischen den Gleichrichtermitteln und der Schaltnetzteil-Schaltung,
Mitteln (21, 22) zum Synchronisieren des Betriebs der Mittel zur Leistungs-Vorkonvertierung mit dem Betrieb der Schaltnetzteil-Schaltung,
wobei die Mittel zur Vorkonvertierung zweite Schaltmittel (Q2) aufweisen und
die Synchronisiermittel (21, 22) den Betrieb der Mittel (20) zur Leistungs-Vorkonvertierung mit dem Betrieb der Schaltnetzteil-Schaltung (30) durch Bilden eines Phasenversatzes zwischen dem Betrieb der zweiten Schaltmittel (Q2) und dem Betrieb der ersten Schaltmittel (Q1) synchronisieren,
ferner mit Energie-Speichermitteln (C1), die mit Mitteln zur Vorkonvertierung und der Schaltnetzteilschaltung verbunden sind,
**dadurch gekennzeichnet, daß**
die Synchronisiermittel (21, 22) Mittel zum Erzeugen einer Steuerspannung (Vᵣₐₘₚ) enthalten und die zweiten Schaltmittel (Q2) so gesteuert sind, daß sie nur bei Empfang der Steuerspannung (Vᵣₐₘₚ) leiten, die einen Wert zwischen einem ersten, unteren Schwellwert (V_{ref1}) und einem zweiten, oberen Schwellwert (V_{ref2}) hat.

2. Netzteil nach Anspruch 1, **dadurch gekennzeichnet, daß** die Mittel (20) zur Leistungs-Vorkonvertierung eine Korrektur des Power Factor des Netzteils (30) bewirken.

3. Netzteil nach Anspruch 1, **dadurch gekennzeichnet, daß** die Mittel (20) zur Leistungs-Vorkonvertierung der Schaltnetzteilschaltung (30) einen Strom nur während eines Teils jedes Zeitintervalls zuführen, das nach dem Abschalten der zweiten Schaltmittel (Q2) und vor dem Abschalten der ersten Schaltmittel (Q1) auftritt.

4. Netzteil (100) nach Anspruch 1, **dadurch gekennzeichnet, daß** die Synchronisiermittel folgende Merkmale enthalten:
Mittel zum Erzeugen eines Rampensignals (Vᵣₐₘₚ),
Mittel zum Erzeugen der ersten Referenzspannung (V_{ref1}),
Mittel zum Erzeugen der zweiten Referenzspannung (V_{ref2}) mit einem Wert unterhalb der Spitzenamplitude des Rampensignals.

5. Netzteil nach Anspruch 4, wobei die Synchronisiermittel (21, 22) ferner folgende Merkmale enthalten:
Mittel (R18) zum Erzeugen einer unteren Referenzspannung (V_{ref1}) und
eine Komparatorschaltung (23) mit Eingängen, die mit der unteren (V_{ref1}) und der oberen (V_{ref2}) Referenzspannung verbunden sind.

6. Netzteil (100) nach Anspruch 5, wobei die Mittel (R18) zum Erzeugen der unteren Referenzspannung (V_{ref1}) mit den Gleichrichtermitteln (10) verbunden sind.

7. Netzteil (100) nach Anspruch 6, wobei die Komparatorschaltung (23) die Leitung des Vorkonverter-Schalters (Q2) ermöglicht, während das Rampensignal zwischen der unteren (V_{ref1}) und der oberen (V_{ref2}) Referenzspannung liegt.

8. Netzteil nach Anspruch 1, wobei die zweiten Schaltmittel (Q2) in den Mitteln (20) zur Leistungs-Vorkonvertierung während jedes Zeitintervalls leiten, in dem die ersten Schaltmittel (Q1) in der Schaltnetzteil-Schaltung (30) leiten.

9. Netzteil nach Anspruch 1, wobei die zweiten Schaltmittel (Q2) in den Mitteln (20) zur Leistungs-Vorkonvertierung für eine Zeitperiode leiten, die kürzer ist als das genannte Zeitintervall.

10. Netzteil nach Anspruch 1, wobei die zweiten Schaltmittel (Q2) in den Mitteln (20) zur Leistungs-Vorkonvertierung nur nach dem Beginn des Zeitintervalls zu leiten beginnen und immer vor den Enden des Zeitintervalls aufhören zu leiten.

11. Netzteil (100) nach Anspruch 4, enthaltend Energie-Speichermittel (C1), die mit den Mitteln zur Leistungs-Vorkonvertierung und der Schaltnetzteil-Schaltung (30) verbunden sind.

12. Netzteil nach Anspruch 11, wobei die Synchronisiermittel (21, 22) außerdem enthalten:
Mittel (R18) zum Erzeugen einer unteren Referenzspannung (V_{ref1}) und
eine Komparatorschaltung (23), deren Eingänge mit der unteren (V_{ref1}) und der oberen (V_{ref2}) Referenzspannung verbunden sind.

13. Netzteil nach Anspruch 12, wobei die Mittel (R18) zum Erzeugen der unteren Referenzspannung (V_{ref1}) mit den Gleichrichtermitteln (10) verbunden sind.

14. Netzteil (100) nach Anspruch 13, **dadurch gekennzeichnet, daß** die Komparatorschaltung die Leitung eines Vorkonverter-Schalters (Q2) auslöst, während das Rampensignal (Vᵣₐₘₚ) zwischen der unteren (V_{ref1}) und der oberen (V_{ref2}) Referenzspannung liegt.

15. Netzteil nach Anspruch 2, **dadurch gekennzeichnet, daß** die Korrektur des Power Factor von einer an den Ausgang der Schaltnetzteil-Schaltung (30) angeschlossenen Last unabhängig bleibt.

16. Netzteil nach Anspruch 11, **dadurch gekennzeichnet, daß** die Zeitdauer des Rampensignals durch ein Signal bestimmt ist, das aus der Schaltnetzteil-Schaltung (30) abgeleitet ist.

17. Netzteil nach Anspruch 16, **dadurch gekennzeichnet, daß** die Steigung des Rampensignals durch die Spannung über den Energie-Speichermitteln (C1) bestimmt ist.

## Revendications

1. Alimentation (100) comportant:
un moyen redresseur (10);
un circuit d'alimentation à découpage (30) comprenant un premier moyen de commutation (Q1);
un moyen préconvertisseur de courant (20) connecté entre ledit moyen redresseur et ledit circuit d'alimentation à découpage,
des moyens (21, 22) pour synchroniser le fonctionnement dudit moyen préconverisseur de courant avec celui dudit circuit d'alimentation à découpage,
ledit moyen préconvertisseur comprenant un second moyen de commutation (Q2); et,
dans laquelle lesdits moyens de synchronisation (21, 22) synchronisent le fonctionnement dudit moyen préconvertisseur de courant (20) avec celui dudit circuit d'alimentation à découpage (30) en réalisant un déphasage entre le fonctionnement dudit second moyen de commutation (Q2) et celui du premier moyen de commutation (Q1), comportant en outre un moyen de stockage d'énergie (C1) connecté audit moyen préconvertisseur et audit circuit d'alimentation à découpage, **caractérisé par** lesdits moyens de synchronisation (21, 22) comprenant un moyen pour générer une tension de commande (Vᵣₐₘₚ) et ledit second moyen de commutation (Q2) est commandé pour conduire seulement quand il reçoit ladite tension de commande (Vᵣₐₘₚ) dont la valeur est comprise entre une première valeur de seuil inférieur(V_{ref1}) et une seconde valeur de seuil supérieur (V_{ref2}).

2. Alimentation selon la revendication 1, **caractérisée en ce que** ledit moyen préconvertisseur de courant (20) effectue sur ladite alimentation (30) une correction du facteur de puissance.

3. Alimentation selon la revendication 1, **caractérise en ce que** ledit moyen de préconvertisseur de courant (20) ne fournit un courant audit circuit d'alimentation à découpage que pendant une partie de l'intervalle de temps qui sépare le moment où le second moyen de commutation (Q2) devient non-passant et celui où ledit premier moyen de commutation (Q1) devient non-passant.

4. Alimentation (100) selon la revendication 1, **caractérisée par** lesdits moyens de synchronisation comportant:
un moyen de génération d'un signal en dent de scie (Vᵣₐₘₚ);
un moyen de génération de ladite première tension de référence (V_{ref1})
un moyen de génération de ladite seconde tension de référence (Vr_{ef2}) dont la valeur est inférieure à l'amplitude de crête dudit signal en dent de scie.

5. Alimentation selon la revendication 4, dans laquelle lesdits moyens de synchronisation (21, 22) comportent en outre:
un moyen (R18) pour générer une tension de référence inférieure (V_{ref1}); et,
un circuit comparateur (23) dont les entrées sont connectées aux dites tensions de référence inférieure (V_{ref1}) et supérieure (V_{ref2}).

6. Alimentation (100) selon la revendication 5, dans laquelle ledit moyen (R18) de génération de ladite tension de référence inférieure (V_{ref1}) est connecté au dit moyen redresseur (10).

7. Alimentation (100) selon la revendication 6, dans laquelle ledit circuit comparateur (23) valide la conduction du commutateur (Q2) du préconvertisseur quand ledit signal en dent de scie est entre lesdites tensions de référence inférieure (V_{ref1}) et supérieure (V_{ref2}).

8. Alimentation selon la revendication 1, dans laquelle ledit second moyen de commutation (Q2) dans ledit moyen préconvertisseur de courant (20) conduit pendant chaque intervalle de temps pendant lequel ledit premier moyen de commutation (Q1) dans ledit circuit d'alimentation à découpage (30) conduit.

9. Alimentation selon la revendication 1, dans laquelle ledit second moyen de commutation (Q2) dans ledit moyen de préconvertisseur de courant (20) conduit pendant une période plus courte que le dit intervalle de temps.

10. Alimentation (100) selon la revendication 1, dans laquelle ledit second moyen de commutation (Q2) dans ledit moyen préconvertisseur de courant (20) ne commence à conduire qu'après le début dudit intervalle de temps et s'arrête toujours de conduire avant la fin dudit intervalle.

11. Alimentation (100) selon la revendication 4, comportant en outre un moyen de stockage d'énergie (C1) connecté audit moyen préconvertisseur de courant et audit circuit d'alimentation à découpage (30).

12. Alimentation selon la revendication 11, dans laquelle lesdits moyens de synchronisation (21,22) comportent en outre:
un moyen (R18) pour générer une tension de référence inférieure (V_{ref1}), et,
un circuit comparateur (23) dont les entrées sont connectées aux dites tensions de référence inférieure (V_{ref1}) et supérieure (V_{ref2}).

13. Alimentation selon la revendication 12, dans laquelle ledit moyen (R18) de génération de ladite tension de référence inférieure (Vref1) est connecté audit moyen redresseur (10).

14. Alimentation (100) selon la revendication 13, **caractérisée en ce que** ledit circuit comparateur déclenche la conduction du commutateur (Q2) du préconvertisseur pendant que ledit signal en dent de scie est entre lesdites tensions de référence inférieure (V_{ref1}) et supérieure (V_{ref2}).

15. Alimentation selon la revendication 2, **caractérisée en ce que** ladite correction du facteur de puissance reste indépendant d'une charge connectée à la sortie dudit circuit d'alimentation à découpage (30).

16. Alimentation selon la revendication 11, **caractérisée en ce que** la durée dudit signal en dent de scie est déterminée par un signal dépendant dudit circuit d'alimentation à découpage (30).

17. Alimentation selon la revendication 16, **caractérisé en ce que** la pente dudit signal en dent de scie est déterminée par la tension aux bornes dudit moyen de stockage d'énergie (C1).
